# EUROPEAN PATENT SPECIFICATION

(11) **EP 2 578 453 B1**
(45) Date of publication and mention of the grant of the patent: **03.01.2018**
(21) Application number: 11184190.4
(22) Date of filing: 06.10.2011
(51) Int. Cl.: B60R 5/04, B60R 7/02

(54) **STOW AWAY LUGGAGE LOAD FLOOR WITH GROCERY BAG HOLDING PROPERTIES**
VERSTAUBARE GEPÄCKLADEFLÄCHE MIT HALTEEIGENSCHAFTEN FÜR LEBENSMITTELLADENTÜTEN
PLANCHER DE CHARGE DE BAGAGES PLIABLE AVEC PROPRIÉTÉS DE TENUE DE SACS D'ÉPICERIE

(43) Date of publication of application: 10.04.2013
(73) Proprietor: Volvo Car Corporation, 40531 Göteborg (SE)
(72) Inventor: Bernhardsson, Nils, 42343 Torslanda (SE)
(74) Representative: Volvo Car Corporation

(56) References cited:
- WO-A1-2004/065197
- US-A- 5 379 906
- US-A- 5 484 091
- US-A1- 2004 041 424
- US-A1- 2008 178 428

## Description

### Technical field

Embodiments herein relate to an arrangement for storing cargo within a vehicle. In particular they relate to an arrangement for storing cargo, especially grocery bags having handles, within a vehicle.

### Background

Storing of cargo within a cargo area of a vehicle in a manner secured for travel is often cumbersome, why cargo, such as grocery bags, are often just placed within the cargo area of the vehicle. As a result grocery bags, or similar storage containers placed within the cargo area of the vehicle will often tip over during vehicle travel with the result of spilling their contents all over the cargo area of the vehicle. Sometime such spillage also results in broken grocery containers, which as a result may leak their content, thus soiling the cargo area of the vehicle.

Arrangements for storing of cargo within a cargo area of a vehicle in a manner secured for travel are known in a variety of embodiments. For example, a receiving container that can be collapsed flat in the manner of a folding box may be attached within a cargo area. In this non-utilization state when collapsed flat, however, a step of greater or lesser height is created with respect to the adjacent cargo area floor because of the unavoidable thickness of the collapsed "package" of container parts; this is very disruptive especially when loading larger objects such as horizontally placed suitcases, since it prevents the particular object from being laid flat on the cargo floor so as not to tip over.

One arrangement attempting to address this inconvenience is previously known through US2004041424, which relates to a system for storing cargo within a vehicle. A support device is attached or attachable in the cargo area of the vehicle, for cargo receiving means. The support device is pivotable, after the cargo receiving means have been removed and/or collapsed flat, from a utilization position lying on a cargo area floor, about a pivot axis extending in the vicinity of the cargo area floor approximately parallel thereto, into a non-utilization position lying approximately parallel to and in the vicinity of a vehicle partition delimiting the cargo area, and thereby uncovering almost the entire cargo area floor. A space directly adjacent to the vehicle partition delimiting the cargo area is necessary for accommodation of the system parts Several hook elements are also arranged, in particular, on the inner side of a cover part, so that objects, for example grocery bags, can be secured by suspension.

However, although the arrangement according to US2004041424 provides an essentialy planar load floor when the system for storing cargo is folded away it still occupies space adjacent a vehicle partition, such as provided by the rear seats of the vehicle. Thus, if the vehicle e.g. is provided with foldable rear seats for expanding the load floor, the system in accordance with US2004041424 will still provide an obstruction to utilizing the thus expanded load floor.

### Summary

Embodiments herein aim to provide an improved arrangement for storing cargo, especially grocery bags having handles, within a vehicle.

This is provided by an arrangement which comprises a recessed secondary load floor forming the bottom of a recess; above the recessed secondary load floor a primary load floor; the primary load floor comprising a first floor section and a second floor section; the first floor section being hinged by first hinges at a first edge thereof above a leading edge of the recess and the second floor section being hinged to the first floor section by second hinges at a second edge thereof opposite to said first edge thereof; whereby the first floor section is foldable from a position essentially parallel with said secondary load floor upwards about said first hinges such that the second floor section is brought therewith and folds downwards about said second hinges to an essentially upright position; the second floor section further being attachable to retaining means within said recess to be retained in the essentially upright position; the second hinges further being provided with hooks; said hooks being arranged to protrude upwards from said second hinges when said second floor section is retained in said essentially upright position; and said hooks being arranged to, when said primary load floor is in said position essentially parallel with said secondary load floor rest recessed flush with said primary load floor.

The arrangement for storing cargo within a vehicle allows cargo, especially grocery bags having handles, to be stored securely and with a high level of user convenience in the cargo area of the vehicle whilst providing an even load floor when not in use. Hereby luggage, such as suitcases may be stored without interference from the arrangement.

According to a second aspect said second hinges consists of injection moulded parts.

Injection moulding of the second hinge, in accordance with the second aspect, provides a cost efficient way of producing the hinge parts allowing also a high degree of freedom in the design of the hinges and the associated hooks.

According to a third aspect each second hinge consists of four hinge parts, an upper rear part, an upper front part, a lower rear part and a lower front part, all of which hinge parts are interconnected with each other by an hinge axis.

Assembly of the second hinges from a number of separate parts, in accordance with the third aspect, renders the hinges cost efficient to produce and assemble while the interconnection provided by the hinge axis also provides for maintaining each respective second hinge as a complete unit prior to assembly. Further, the construction of the second hinges from a number of separate parts may also reduce repair costs, as it may suffice to replace one such part should a second hinge be damaged.

According to a fourth aspect the second hinges are clamped around the primary load floor sections by upper and lower hinge parts and the lower hinge parts secured to the upper hinge parts via openings through the primary load floor.

Attachment of the second hinges to the primary load floor by clamping, in accordance with the fourth aspect, provides for a reliable attachment which is able to withstand the substantial loads which an arrangement for storing cargo within a vehicle may be subjected to during vehicle travel.

According to a fifth aspect the hook of each second hinge is formed integrally with each respective said upper rear hinge part.

Forming the hook integrally with a hinge part, in accordance with the fifth aspect, provides for cost efficient production and assembly, as the hooks will automatically be mounted at the same time as the second hinges and further automatically correctly positioned.

### Brief description of the drawings

In the following, embodiments herein will be described in greater detail by way of example only with reference to attached drawings, in which
Fig. 1 shows, in perspective, an arrangement for storing cargo, especially grocery bags having handles, within a vehicle in a first, stowed, position.
Fig. 2 shows, in perspective, an arrangement for storing cargo, especially grocery bags having handles, within a vehicle in a second, upright, position providing grocery bag holding properties.
Fig. 3 shows, in a side view, an arrangement for storing cargo, especially grocery bags having handles, within a vehicle in a second, upright, position providing grocery bag holding properties.
Fig. 4 shows a second hinge of the arrangement having an integrated hook.

Still other objects and features of embodiments herein will become apparent from the following detailed description considered in conjunction with the accompanying drawings. It is to be understood, however, that the drawings are designed solely for purposes of illustration and not as a definition of the limits hereof, for which reference should be made to the appended claims. It should be further understood that the drawings are not necessarily drawn to scale and that, unless otherwise indicated, they are merely intended to conceptually illustrate the structures and procedures described herein.

### Description of embodiments

In overview, embodiments herein relate to an arrangement 1 for storing cargo, especially grocery bags having handles, within a vehicle.

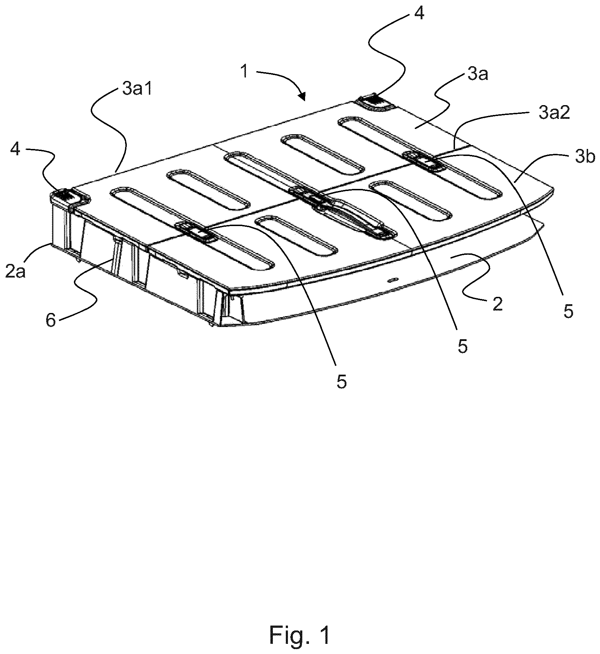

The arrangement comprises a recessed secondary load floor 2 forming the bottom of a recess, which recess is normally closed by an above the recessed secondary load floor 2 arranged primary load floor 3a, 3b. The primary load floor 3a, 3b comprises a first floor section 3a and a second floor section 3b. The first floor section 3a is hinged by first hinges 4 at a first edge 3a1 thereof above a leading edge of the recess 2a. The second floor section 3b is hinged to the first floor section 3a by second hinges 5 at a second edge 3a2 thereof opposite to said first edge 3a1 thereof. In the embodiment shown in figure 1, First 3a and second 3b floor sections are interconnected by three second hinges 5. The three second hinges 5 form a hinge line in line with a lower surface of the primary load floor 3a, 3b.

The first floor section 3a is further foldable from a position essentially parallel with said secondary load 2 floor, as shown in figure 1, upwards about said first hinges 4 such that the second floor section 3b is brought therewith and folds downwards about said second hinges 5 to an essentially upright position.

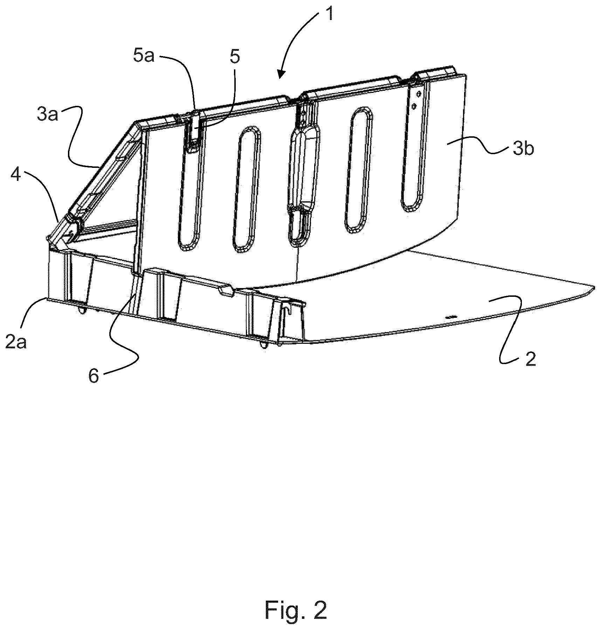

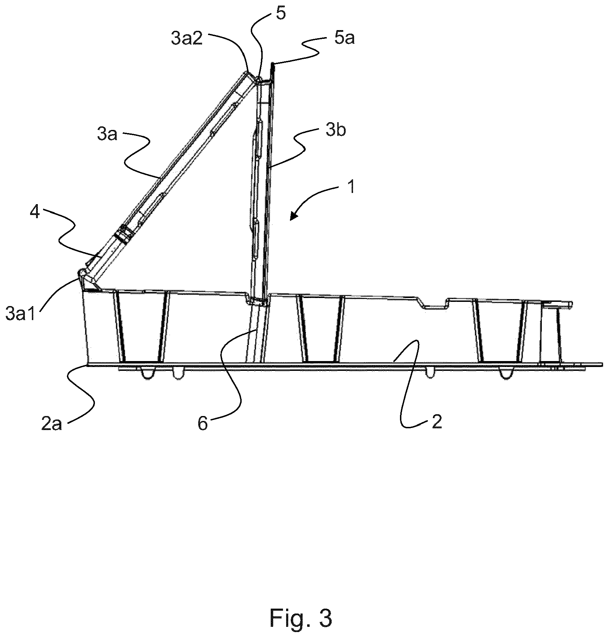

The second floor section 3b is further attachable to retaining means 6, which are arranged within the recess, such that the second floor section 3b may be retained in the essentially upright position, as illustrated in figures 2 and 3.

The second hinges 5 are further provided with hooks 5a. These hooks 5a are arranged to protrude upwards from said second hinges 5 when the second floor section 3b is retained in the essentially upright position, as illustrated in figures 2 and 3.

The hooks 5a are further arranged to rest recessed flush with said primary load floor 3a, 3b when said primary load floor 3a, 3b is in the position essentially parallel with said secondary load floor 2, as illustrated in figure 1.

Thus, when operating the primary load floor 3a, 3b the two floor sections 3a, 3b are raised while being folded over the hinge line formed by the three second hinges 5, whereupon the hooks 5a, which may be integral with each respective second hinge 5 becomes exposed to protrude upwardly from each respective second hinge 5. These second hooks 5 may then be used for securing the handles of grocery bags or the like. A stable support of these bags is further provided through the second load floor section 3b being fixed in an essentially upright position when the folded primary load floor 3a, 3b is parked in the retaining means 6. Rising of the primary load floor 3a, 3b exposes the underlying secondary load floor 2, upon which the grocery bags are intended to rest when secured to the second hooks 5 by their handles.

In one embodiment the second hinges 5 consists of injection moulded parts 5b, 5c, 5d, 5e.

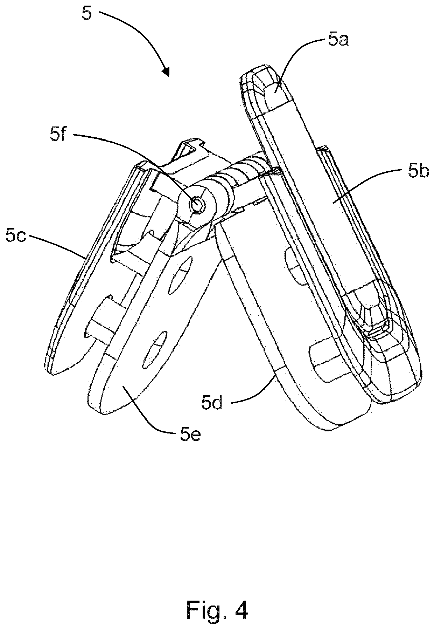

In a further embodiment, as illustrated in figure 4, each second hinge 5 consists of four hinge parts, an upper rear part 5b, an upper front part 5c, a lower rear part 5d and a lower front part 5e, all of which hinge parts 5b, 5c, 5d, 5e are interconnected with each other by an hinge axis 5f.

In a still further embodiment the second hinges 5c are clamped around the primary load floor 3a, 3b sections 3a, 3b by upper 5b, 5c and lower 5d, 5e hinge parts and the lower hinge parts 5d, 5e secured to the upper hinge parts 5b, 5c via openings through the primary load floor 3a, 3b. Securing of the lower hinge parts 5d, 5e to the upper hinge parts 5b, 5c may be effected using screws, bolts and nuts, snap-lock arrangements, gluing, welding, or other appropriate securing means.

In a yet further embodiment the hook 5a of each second hinge 5 are formed integrally with each respective upper rear hinge part 5b.

In accordance with the present application is also envisaged a vehicle comprising an arrangement for storing cargo, especially grocery bags having handles, within a vehicle as described above.

The above-described embodiments may be varied within the scope of the following claims.

Thus, while there have been shown and described and pointed out fundamental novel features of the embodiments herein, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are equivalent. Moreover, it should be recognized that structures and/or elements and/or method steps shown and/or described in connection with any disclosed form or embodiment herein may be incorporated in any other disclosed or described or suggested form or embodiment as a general matter of design choice.

## Claims

1. An arrangement (1) for storing cargo, especially grocery bags having handles, within a vehicle, comprising:
a recessed secondary load floor (2) forming the bottom of a recess;
above the recessed secondary load floor (2) a primary load floor (3a, 3b);
the primary load floor (3a, 3b) comprising a first floor section (3a) and a second floor section (3b);
the first floor section (3a) being hinged by first hinges (4) at a first edge (3a1) thereof above a leading edge of the recess (2a) and the second floor section (3b) being hinged to the first floor section (3a) by second hinges (5) at a second edge (3a2) thereof opposite to said first edge (3a1) thereof;
whereby the first floor section (3a) is foldable from a position essentially parallel with said secondary load (2) floor upwards about said first hinges (4) such that the second floor section (3b) is brought therewith and folds downwards about said second hinges (5) to an essentially upright position; **characterized by**:
the second floor section (3b) further being attachable to retaining means (6) within said recess to be retained in the essentially upright position;
the second hinges (5) further being provided with hooks (5a);
said hooks (5a) being arranged to protrude upwards from said second hinges (5) when said second floor section (3b) is retained in said essentially upright position; and
said hooks (5a) being arranged to, when said primary load floor (3a, 3b) is in said position essentially parallel with said secondary load floor (2) rest recessed flush with said primary load floor (3a, 3b).

2. An arrangement (1) according to claim 1, **characterized in that** said second hinges (5) consists of injection moulded parts (5b, 5c, 5d, 5e).

3. An arrangement according to any one of claims 1 to 2, **characterized in that** each second hinge (5) consists of four hinge parts, an upper rear part (5b), an upper front part (5c), a lower rear part (5d) and a lower front part (5e), all of which hinge parts (5b, 5c, 5d, 5e) are interconnected with each other by an hinge axis (5f).

4. An arrangement (1) according to claim 3, **characterized in that** the second hinges (5c) are clamped around the primary load floor (3a, 3b) sections (3a, 3b) by upper (5b, 5c) and lower (5d, 5e) hinge parts and the lower hinge parts (5d, 5e) secured to the upper hinge parts (5b, 5c) via openings through the primary load floor (3a, 3b).

5. An arrangement (1) according to any one of claims 3 to 4, **characterized in that** the hook (5a) of each second hinge (5) is formed integrally with each respective said upper rear hinge part (5b).

6. A vehicle **characterized in that** it comprises an arrangement (1) according to any one of claims 1 to 5.

## Patentansprüche

1. Anordnung (1) zum Verstauen von Stückgut, insbesondere von Lebensmittelladentüten mit Henkeln, in Fahrzeugen, umfassend:
eine vertiefte Nebenladefläche (2), die den Boden einer Vertiefung bildet,
eine Hauptladefläche (3a, 3b) über der vertieften Nebenladefläche (2),
wobei die Hauptladefläche (3a, 3b) einen ersten Flächenabschnitt (3a) und einen zweiten Flächenabschnitt (3b) umfasst,
wobei der erste Flächenabschnitt (3a) durch erste Scharniere (4) an einer ersten Kante (3a1) desselben über einer Vorderkante der Vertiefung (2a) angelenkt ist und der zweite Flächenabschnitt (3b) über zweite Scharniere (5) an einer gegenüber der ersten Kante (3a1) desselben gelegenen zweiten Kante (3a2) desselben an dem ersten Flächenabschnitt (3a) angelenkt ist,
wobei der erste Flächenabschnitt (3a) aus einer Stellung, die im Wesentlichen parallel zu der Nebenladefläche (2) gelegen ist, auf eine solche Weise nach oben um die ersten Scharniere (4) klappbar ist, dass der zweite Flächenabschnitt (3b) mit demselben in eine im Wesentlichen aufrechte Stellung gebracht wird und sich nach unten um die zweiten Scharniere (5) in die im Wesentlichen aufrechte Stellung klappt,
**dadurch gekennzeichnet, dass**:
der zweite Flächenabschnitt (3b) ferner an Haltemitteln (6) in der Vertiefung angebracht werden kann, um in der im Wesentlichen aufrechten Stellung gehalten zu sein,
die zweiten Scharniere (5) ferner mit Haken (5a) versehen sind,
die Haken (5a) so angeordnet sind, dass sie von den zweiten Scharnieren (5) nach oben vorstehen, wenn der zweite Flächenabschnitt (3b) in der im Wesentlichen aufrechten Stellung gehalten ist, und
die Haken (5a) so angeordnet sind, dass sie vertieft bündig mit der Hauptladefläche (3a, 3b) ruhen, wenn sich die Hauptladefläche (3a, 3b) in der im Wesentlichen parallel zu der Nebenladefläche (3) gelegenen Stellung befindet.

2. Anordnung (1) nach Anspruch 1, **dadurch gekennzeichnet, dass** die zweiten Scharniere (5) aus Spritzgussteilen (5b, 5c, 5d, 5e) bestehen.

3. Anordnung nach einem der Ansprüche 1 bis 2, **dadurch gekennzeichnet, dass** jedes zweite Scharnier (5) aus vier Scharnierteilen, einem oberen hinteren Teil (5b), einem oberen vorderen Teil (5c), einem unteren hinteren Teil (5d) und einem unteren vorderen Teil (5e), besteht, wobei alle Scharnierteile (5b, 5c, 5d, 5e) über eine Scharnierachse (5f) miteinander verbunden sind.

4. Anordnung (1) nach Anspruch 3, **dadurch gekennzeichnet, dass** die zweiten Scharniere (5c) durch die oberen (5b, 5c) und die unteren (5d, 5e) Scharnierteile um die Abschnitte (3a, 3b) der Hauptladefläche (3a, 3b) angeklemmt sind und die unteren Scharnierteile (5d, 5e) über durch die Hauptladefläche (3a, 3b) verlaufende Öffnungen an den oberen Scharnierteilen (5b, 5c) befestigt sind.

5. Anordnung (1) nach einem der Ansprüche 3 bis 4, **dadurch gekennzeichnet, dass** der Haken (5a) jedes zweiten Scharniers (5) einstückig mit jedem entsprechenden oberen hinteren Scharnierteil (5b) ausgebildet ist.

6. Fahrzeug, **dadurch gekennzeichnet, dass** es eine Anordnung (1) nach einem der Ansprüche 1 bis 5 umfasst.

## Revendications

1. Agencement (1) pour ranger un chargement, en particulier des sacs d'épicerie comportant des poignées, à l'intérieur d'un véhicule, comprenant :
un plancher secondaire de charge (2) renfoncé formant le fond d'un renfoncement ;
au-dessus du plancher secondaire de charge (2) renfoncé un plancher principal de charge (3a, 3b) ;
le plancher principal de charge (3a, 3b) comprenant une première section (3a) de plancher et une seconde section (3b) de plancher ;
la première section (3a) de plancher étant articulée par de premières charnières (4) au niveau de son premier bord (3a1) au-dessus du bord avant du renfoncement (2a) et la seconde section (3b) de plancher étant articulée sur la première section (3a) de plancher par de secondes charnières (5) au niveau de son second bord (3a2) à l'opposé dudit premier bord (3a1),
moyennant quoi la première section (3a) de plancher peut se plier vers le haut autour desdites premières charnières (4) depuis une position essentiellement parallèle audit plancher secondaire de charge (2), de telle sorte que la seconde section (3b) de plancher est entraînée avec elle et se plie vers le bas autour desdites secondes charnières (5) dans une position sensiblement verticale,
**caractérisé en ce que** :
la seconde section (3b) de plancher peut en outre être fixée à un moyen de retenue (6) à l'intérieur dudit renfoncement pour être retenue dans la position sensiblement verticale ;
les secondes charnières (5) sont en outre pourvues de crochets (5a) ;
lesdits crochets (5a) étant agencés pour dépasser vers le haut desdites secondes charnières (5) quand ladite seconde section (3b) de plancher est retenue dans la position sensiblement verticale ; et
lesdits crochets (5a) étant agencés, quand ledit plancher principal de charge (3a, 3b) est dans ladite position essentiellement parallèle audit plancher secondaire de charge (2), pour être encastrés à fleur avec ledit plancher principal de charge (3a, 3b).

2. Agencement (1) selon la revendication 1, **caractérisé en ce que** lesdites secondes charnières (5) sont constituées de pièces (5b, 5c, 5d, 5e) moulées par injection.

3. Agencement selon la revendication 1 ou 2, **caractérisé en ce que** chaque seconde charnière (5) est constituée de quatre pièces de charnière, une pièce supérieure arrière (5b), une pièce supérieure avant (5c), une pièce inférieure arrière (5d) et une pièce inférieure avant (5e), des pièces (5b, 5c, 5d, 5e) de charnière qui sont toutes reliées l'une à l'autre par un axe (5f) de charnière.

4. Agencement (1) selon la revendication 3, **caractérisé en ce que** les secondes charnières (5c) sont serrées autour des sections (3a, 3b) du plancher principal de charge (3a, 3b) par les pièces supérieures (5b, 5c) et inférieures (5d, 5e) de charnière, les pièces inférieures (5d, 5e) de charnière étant solidement fixées aux pièces supérieures (5b, 5c) de charnière par des ouvertures traversant le plancher principal de charge (3a, 3b).

5. Agencement (1) selon la revendication 3 ou 4, **caractérisé en ce que** le crochet (5a) de chaque seconde charnière (5) fait partie intégrante de chaque pièce supérieure arrière (5b) de charnière correspondante.

6. Véhicule **caractérisé en ce qu'**il comprend un agencement (1) selon l'une quelconque des revendications 1 à 5.
